# EUROPEAN PATENT APPLICATION

(11) **EP 4 691 843 A1**
(43) Date of publication of application: **11.02.2026**
(21) Application number: 25194038.3
(22) Date of filing: 05.08.2025
(51) Int. Cl.: B60L 58/20, B60L 15/20, B60L 50/62, B60L 50/75, B60L 58/13

(54) **BATTERY ELECTRIC VEHICLE POWERTRAIN ARCHITECTURES AND METHODS OF OPERATING SAME**

(30) Priority: 07.08.2024 IN 202441059592; 29.07.2025 US 202519283485
(71) Applicant: Cummins Inc., Columbus, IN 47201 (US)
(72) Inventor: KANIKDALE, Tushar Sham, Pune 411045 (IN); KALE, Prachetas, Pune 411045 (IN); YADAV, Dhananjay Haribhau, Pune 411045 (IN)
(74) Representative: Cleveland Scott York

(57) **Abstract**

A system of a vehicle (100) includes: a first motor (102) associated with a first controller (104); a second motor (106) associated with a second controller (108); a first battery (112) associated with a first battery management system (110); a second battery (116) associated with a second battery management system (114); and a master controller (118) coupled to the first controller (104), the second controller (108), the first battery management system (110), and the second battery management system (114). The master controller (118) is configured to: receive an operating mode for the vehicle (100) and activate the first motor (102) or the second motor (106) and the first battery (112) or the second battery (116) based on the operating mode for the vehicle (100).

## Description

### CROSS-REFERENCE TO RELATED APPLICATION

This U.S. Patent Application claims the benefit of and priority to Indian Provisional Application No. 202441059592, filed August 7, 2024, the content of which is incorporated herein by reference in its entirety for all purposes.

### TECHNICAL FIELD

The present disclosure relates generally to the field of at least partially electric vehicle powertrain systems and controls. More particularly, the present disclosure relates to systems and methods for controlling vehicle powertrains and vehicle batteries.

### BACKGROUND

Electric vehicles may utilize one or more electric powertrains that deliver power from a battery to drive a vehicle among other operations. An electric powertrain may include electric motors, power electronics, transmissions, and a battery system. It would be advantageous to operate an electric powertrain dynamically, based on the actions of the vehicle and driver, in order to optimize the energy usage of the vehicle's electric power source.

### SUMMARY

One embodiment relates to a system of a vehicle. The system includes a first motor associated with a first controller, a second motor associated with a second controller, a first battery associated with a first battery management system, a second battery associated with a second battery management system, and a master controller coupled to the first controller, the second controller, the first battery management system, and the second battery management system. In some embodiments, the master controller is configured to receive an operating mode for the vehicle and activate the first motor or the second motor and the first battery or the second battery based on the operating mode for the vehicle. In some embodiments a range extender is coupled to the first battery and the first controller. In some embodiments, the master controller is configured to activate both the first motor and the second motor based on the operating mode.

In some embodiments the first motor is a different motor type from the second motor. In some embodiments, the first motor is an induction motor, and the second motor is a permanent magnet motor. In some embodiments, the first battery is a lithium-ion battery, and the second battery is a lithium-ion battery having a nickel manganese cobalt (NMC) chemistry or a similar battery having chemistry optimized for high energy density and power density relative to the first battery.

Another embodiment relates to a method. The method includes: receiving, by a controller, at least one operational parameter of a vehicle; determining, by the controller, that the vehicle is in a first operating mode based on the received at least one operational parameter; responsive to determining that the vehicle is in a first operating mode, activating a first motor of the vehicle and a first battery of the vehicle; determining, by the controller, that the vehicle is operating in a second operating mode; and responsive to determining that the vehicle is operating in the second operating mode, activating a second motor of the vehicle and a second battery of the vehicle. The method may further include determining, by the controller, that the vehicle is in a third operating mode; and, responsive to determining that the vehicle is in the third operating mode, activating one of the first motor or the second motor of the vehicle and one of the first battery or second battery of the vehicle. In some embodiments, the first operating mode and the second operating mode comprise any one of: a starting mode; a cruising mode; an accelerating mode; a braking/recuperating mode; an idling mode; a low load mode; or a motoring mode.

Another embodiment relates to a vehicle system. The vehicle system includes a first motor, a second motor, a first battery coupled with at least one of the first motor or the second motor, a second battery coupled with at least one of the first motor or the second motor, and a controller. The controller includes at least one processor coupled with at least one memory device storing instructions that, when executed by the at least one processor, cause the controller to perform operations. The operations include receiving data indicative of an operating mode of a vehicle including the vehicle system, and activating at least one of the first motor or the second motor based on the operating mode of the vehicle. The operations further include activating at least one of the first battery or the second battery based on the operating mode of the vehicle.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE DRAWINGS

FIG. 1 is a schematic diagram of a dual motor and dual battery powertrain system for a vehicle, according to an exemplary embodiment.
FIG. 2 is a schematic diagram of a dual motor and dual battery powertrain system of FIG. 1 with an added range extender, according to another exemplary embodiment.
FIG. 3 is a table of a control strategy based on at least one of a battery type, a motor type, or a vehicle driving mode for a vehicle, according to an exemplary embodiment.
FIG. 4 is another table of a control strategy based on at least one of a battery type, a motor type, or a vehicle driving mode for a vehicle, according to an exemplary embodiment.
FIG. 5 is a flow chart of a control process for a battery electric vehicle, according to an exemplary embodiment.

### DETAILED DESCRIPTION

Referring to the FIGURES generally, the various embodiments disclosed herein relate to a system for and a method of operating a multiple, particularly a dual, motor and a multiple, particularly a dual, battery vehicle architecture. The vehicle system may include a first motor associated with a first controller, a second motor associated with a second controller, a first battery associated with a first battery management system, a second battery associated with a second battery management system, and a master controller coupled to the first controller, the second controller, the first battery management system, and the second battery management system. In exemplary embodiments, the first motor is an induction motor, and the second motor is a permanent magnet motor. In exemplary embodiments, the first battery is a high-energy cell pack such as a lithium-ion battery, and the second battery is a high-power cell pack such as a NMC battery. In operation, the master controller is configured to receive an operating mode for the vehicle and activate the induction motor and/or the permanent magnet motor and the high-energy cell-pack or the high-energy cell pack based on the operating mode for the vehicle.

Technically and beneficially, the systems, methods, and apparatuses described herein provide an improved system and control strategy for utilizing an induction motor, a permanent magnet motor, a high-energy cell pack, and a high-power cell pack according to their distinct characteristics and advantages in certain operational states. The system and methods described herein offer a solution to the need for heavy-duty vehicles with zero or low unwanted emissions by providing an electric powertrain designed for industrial vehicles that require features like regenerative braking.

Conventional battery electric powertrain architectures suffer due to the use of high-cost rare earth materials in motors, exhibit lower regeneration potential, demagnetization risks, and yield poor battery cycle life due to arduous duty cycles. The present disclosure addresses these drawbacks by reducing cost and improving system level performance. As described herein, the systems and methods are operable across a range of driving modes of vehicles to achieve desired steady state and/or transient performance, a higher operating range (e.g., a distance travelled before a required charge event) for the vehicle, and a relatively higher battery life. These and other features and benefits are described more fully herein below.

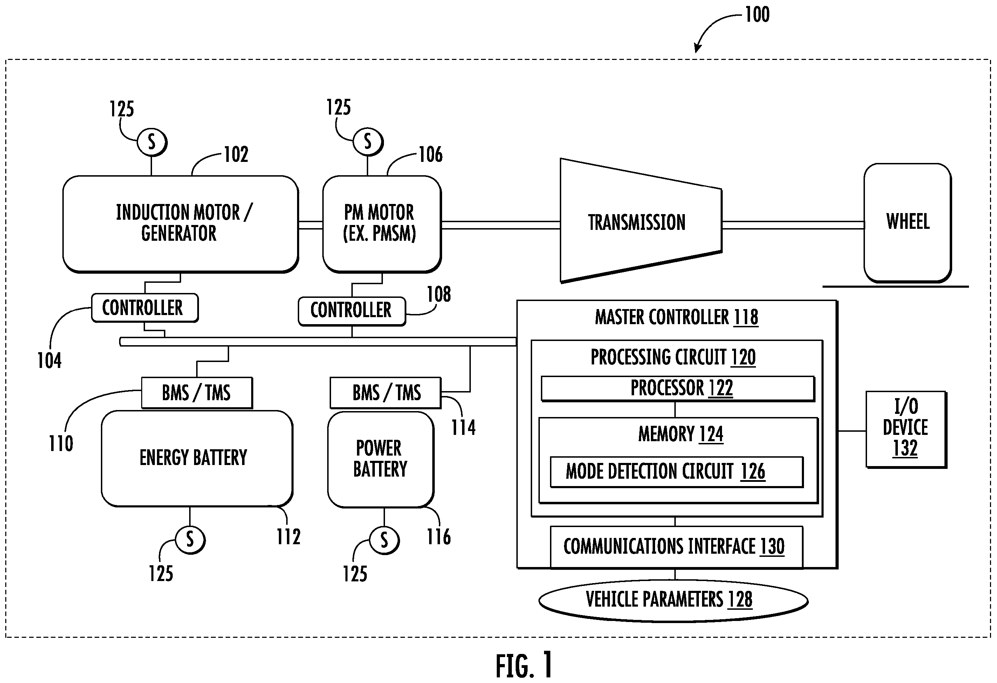

Referring now to FIG. 1, a schematic diagram of a multiple motor and multiple battery powertrain system is shown, according to an exemplary embodiment. In the example shown, the vehicle system 100 includes two motors and two batteries that are specific to each of the two motors. In other examples, more than one battery may be specific to each motor, or the batteries may provide power to more than one motor. In the example shown, the vehicle system 100 is embodied in a vehicle. The vehicle may be any type of passenger or commercial automobile, such as a commercial on-road vehicle, including, but not limited to, a line haul truck (e.g., a semi-truck, a school bus, a garbage truck, etc.); a non-commercial on-road vehicle, such as a car, truck, sport utility vehicle, cross-over vehicle, van, minivan, automobile, etc.; an off-road vehicle, such as a tractor, airplane, boat, forklift, front end loader, etc.; and/or any other type of machine or vehicle that is suitable for the systems described herein. In some embodiments, the vehicle is part of a fleet that includes one or more vehicles.

In some embodiments, the vehicle system 100 includes a first motor that is structured as an induction motor 102 and a second motor that is structured as a permanent magnet motor (i.e., the PM motor 106). In some embodiments, the induction motor 102 and the PM motor 106 may each be coupled to their own controller (i.e., a specific motor controller for each motor). In this embodiment, each motor controller, shown as controllers 104 and 108, is communicatively coupled to a master controller 118, from which the motor controllers receive operational commands. In other embodiments, the structural and functional features of the controllers 104 and 108 may be included in the master controller 118. Beneficially, in this latter embodiment, the number of hardware components in the vehicle system 100 may decrease. The motors are both connected to the vehicle's transmission, such that either motor may control the motion of the vehicle.

The master controller 118 may be structured as one or more vehicle controllers/control systems, such as one or more electronic control units. The master controller 118 may be separate from or included with at least one of a transmission control unit, an exhaust aftertreatment control unit, a powertrain control module, an engine control module or unit, or other vehicle controllers. In one embodiment, the components of the master controller 118 are combined into a single unit. In another embodiment, one or more of the components may be geographically dispersed throughout the system or vehicle. In this regard, various components of the master controller 118 may be dispersed in separate physical locations of the vehicle associated with the vehicle system 100. All such variations are intended to fall within the scope of the disclosure.

In the example shown, the master controller 118 includes at least one processing circuit 120 having at least one processor 122 and at least one memory device 124 comprising a mode detection circuit 126, and a communication interface 130. The processing circuit 120 may be configured to execute or implant the instructions, commands, and/or control processes described herein.

The at least one processor 122 may be implemented as one or more processors, one or more Application Specific Integrated Circuits (ASIC), one or more Field Programmable Gate Arrays (FPGAs), a Digital Signal Processor (DSP), a group of processing components, or other suitable electronic processing components. The one or more processors may be shared by multiple circuits. Alternatively or additionally, the one or more processors may be configured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure. The at least one memory device 124 (e.g., RAM, ROM, Flash Memory, hard disk storage, etc.) may store data and/or computer code for facilitating the various processes described herein. The memory device 124 may be communicably coupled to the processor 122 to provide computer code or instructions to the processor 122 for executing at least some of the processes described herein. Moreover, the memory device 124 may be or include tangible, non-transient volatile memory or non-volatile memory. Accordingly, the memory device 124 may include database components, object code components, script components, or any other type of information structure for supporting the various activities and information structures described herein.

The master controller 118 may be structured to include the entirety of the communication interface 130 or include only a portion of the communication interface 130. The communication interface 130 is communicatively coupled to the processing circuit 120. The communication interface 130 may include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle). For example, the communication interface 130 may receive sensor data from various vehicle sensors 125. In another example, the communication interface 130 may receive data from an Accelerator Pedal Position (APP) sensor, a pressure sensor, an engine torque sensor, a battery sensor, etc. The communication interface may transmit the collected sensor data to the processing circuit 120. The sensor data may be used to determine vehicle operational parameters 128, such as an accelerator pedal position, a brake pedal position, a vehicle speed, navigational inputs, and a run time.

The vehicle includes a plurality of sensors 125 that collect data indicative of operational parameters. The sensors 125 are coupled to the master controller 118, such that the master controller 118 can monitor, receive, and/or acquire data indicative of operation of the vehicle system 100 (which may be referred to as operational data associated with the vehicle, operational parameters, and similar terms herein). In this regard, the sensors 125 may include one or more physical (real) or virtual sensors 125. For example, the sensors 125 may include temperature sensors. The temperature sensors acquire data indicative of or, if virtual, determine an approximate temperature of various components or systems, such as the exhaust gas at or approximately at their disposed location. A speed sensor is configured to provide a speed signal to the master controller 118 indicative of a vehicle speed. In some embodiments, there may be a sensor that provides a speed of the vehicle (e.g., miles-per-hour, kilometers-per-hour) while in other embodiments the speed of the vehicle may be determined by other sensed or determined operating parameters of the vehicle (e.g., engine speed in revolutions-per-minute may be correlated to vehicle speed using one or more formulas, a look-up table(s), etc.).

The sensors 125 may include a battery level sensor that determines a level of charge in the batteries of vehicle system 100 (e.g., high-power cell pack 116, high-energy cell pack 112), such that a fuel economy may be determined based on the speed of the vehicle relative to the charge consumed by the electric motive device(s) (i.e., to determine a distance-per-unit of fuel consumed, such as miles-per-kWh or kilometers-per-kWh, etc.). The sensors 125 may include a battery sensor that determines a state-of-charge of one or more batteries of the vehicle system 100, such that the master controller 118 may determine a distance-per-unit of battery charge consumed. Based on the foregoing, the master controller 118 may determine a fuel economy for the vehicle. It should be understood that other different/additional sensors 125 may also be included with the vehicle system 100, a pressure sensor, a motor torque sensor, a battery state of charge sensor, a battery temperature sensor, etc. Those of ordinary skill in the art will appreciate and recognize the high configurability of the sensors 125 and their associated positions in the vehicle system 100.

In some embodiments, the master controller 118 is configured as an on-board computing device (e.g., onboard the vehicle) that captures data including vehicle operational parameters. The master controller 118 may receive operational parameters directly via one or more of the aforementioned sensors 125 onboard the vehicle. In yet another example, the master controller 118 receives operational parameters and determines operational parameters from information from a telematics device, receives information from real or virtual sensors 125, and/or determines vehicle operational parameters based on information from sensors 125 onboard the vehicle. The controller may store the data (e.g., in the memory device 124).

In some examples, the master controller 118 is communicatively coupled to a telematics device such that the master controller 118 may communicate with out-of-vehicle systems (e.g., a remote computing system). In other embodiments, the functionality of the telematics device/unit is included with the master controller 118 (e.g., as part of the communication interface) such that the separate telematics device is excluded from the vehicle system 100. The telematics unit/device may include one or more memory devices 124 for storing the tracked data, and one or more electronic processing units for processing certain information or data. In some embodiments, the telematics device is coupled to the communication interface 130 for facilitating the exchange of data between the telematics unit and one or more remote devices. In this regard, the communication interface 130 and/or telematics device may be configured as any type of mobile communication interface or protocol including, but not limited to, Wi-Fi, WiMAX, internet radio, Bluetooth, ZigBee, satellite radio, Cellular, GSM, GPRS, LTE, and the like. The telematics unit may also be communicatively coupled to the master controller 118 of the vehicle system 100.

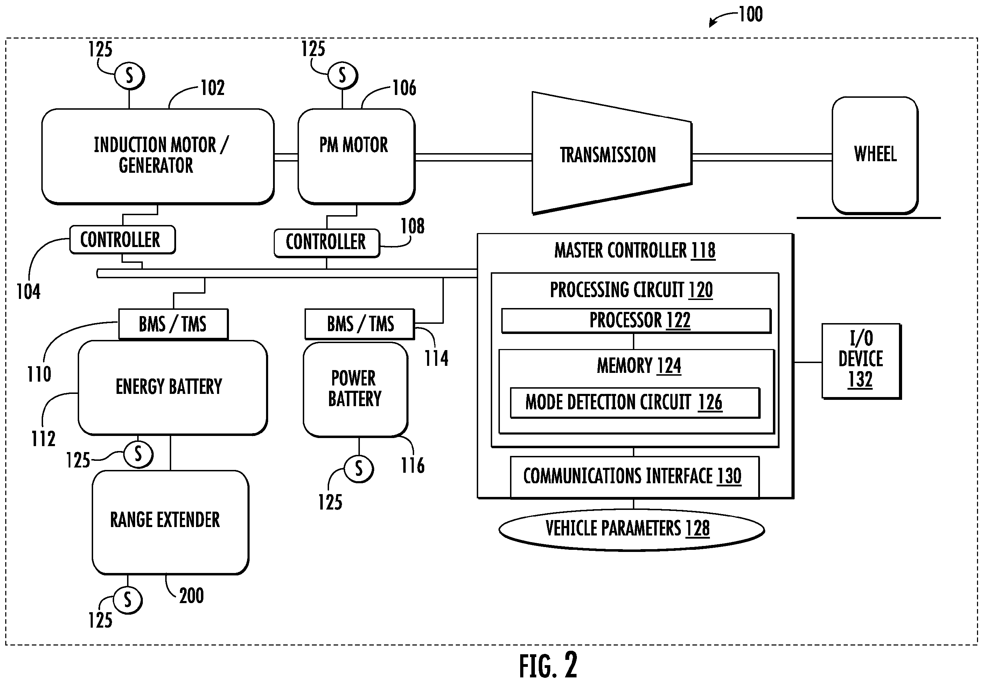

In some examples, the system 100 includes an operator input/output (I/O) device 132. The operator input/output (I/O) 132 device may be coupled with the master controller 118, such that information may be exchanged between the master controller 118 and the I/O device 132, where the information may relate to one or more components of FIGS. 1 and 2 or determinations (described below) of the master controller 118. The operator I/O device 132 enables an operator of the system 100 to communicate with the master controller 118 and one or more components of the system 100 of FIGS. 1 and 2. For example, the I/O device 132 may include, but is not limited to, an interactive display, a touchscreen device, one or more buttons and switches, voice command receivers, etc. In this way, the operator input/output device may provide one or more indications or notifications to an operator, such as a malfunction indicator lamp (MIL), etc. In some examples, the I/O device 132 includes a dashboard input device (e.g., a button, a switch, etc.) that allows a user to activate a particular battery (e.g., the high-power cell pack 116, the high-energy cell pack 112) or a particular motor (e.g., the induction motor 102, the PM motor 106).

The master controller 118 may receive data indicative of a route or mission associated with the system 100 (e.g., from a user input via the I/O device 132, a remote computing system, a fleet manager, etc.). As used herein a "route" or "mission" of a vehicle refers to an origin location or current location of the vehicle, a destination of the vehicle, and a path between the origin/current location and the destination. In other words, the route refers to the path between two or more points. In some examples, the data indicative of the route associated with the system 100 includes a location of one or more charging stations located within a predefined proximity of the route.

In some examples, the master controller 118 may receive data indicative of one or more system 100 application requirements. For example, a user/operator of the system 100, a fleet manager, or the like, may input (e.g., via the I/O device 132, via a user device, etc.) a payload capacity associated with the vehicle embodying the system 100. The payload capacity refers to a predefined maximum weight the vehicle can carry or haul in addition to its own weight (e.g., a cargo/load capacity). The payload capacity may include the weight of passengers, cargo, accessories, and/or equipment carried by the vehicle. A user (e.g., an operator of the vehicle, fleet manager, etc.) may input a space availability (e.g., cargo volume or volume capacity) associated with the vehicle embodying the system 100. The space availability is a total amount of usable physical space within a vehicle that can be used to store or transport items. Space availability determines how much and what type of cargo can physically fit inside the vehicle (or a trailer coupled thereto), regardless of its weight. A user (e.g., an operator of the vehicle, fleet manager, etc.) may input a range expected for the vehicle embodying the system 100, or more specifically, a range that the vehicle is expected to be able to travel based on a current state of charge of the high-energy cell pack 112 and the high-power cell pack 116. In this way, the master controller 118 may adjust the control strategy discussed in greater detail below based on the application requirements of the vehicle embodying the system 100 or a fleet of vehicle. Technically and beneficially, this makes the control scheme of the master controller 118 modular in application, such that the control strategy accommodates a variety of vehicle types, vehicle application requirements, and the like.

The induction motor 102 is a motor that utilizes electromagnetic induction to convert electrical energy to mechanical energy. The induction motor 102 may include a stator and a rotor that are housed inside of a housing. When AC power is supplied to the induction motor 102 from a battery (e.g., the high-power cell pack 116, the high-energy cell pack 112), the stator produces a rotating magnetic field, thereby inducing electric current in the rotor. The electric current induced in the rotor generates a second magnetic field, which interacts with the rotating magnetic field of the stator. The interaction between the magnetic field of the stator and the magnetic field of the rotor produces torque on the rotor, thereby rotating the rotor. The energy produced by the rotor is transferred through an output shaft to the transmission of the vehicle system 100, which ultimately transmits the force to the wheels, enabling the vehicle to move. The induction motor 102 may provide relatively low torque compared to the PM motor 106. As described herein, the induction motor 102 is operable for use in medium to high torque vehicle operating modes, such as cruising, braking, and/or recuperating.

Additionally, the induction motor 102 may be operable for use with braking due to higher energy and regeneration potentials. In this way, the induction motor 102 may be suited for regenerative braking. In operation, the induction motor 102 operates as a generator that converts the kinetic energy of the vehicle back into electrical energy. During regenerative braking, the deceleration of the vehicle results in the conversion of the vehicle's kinetic energy to rotational energy. The induction motor 102 may operate as a generator producing electrical current from the rotational energy produced during braking. In exemplary embodiments, an inverter is coupled to the induction motor 102 to convert the collected electricity into direct current. The induction motor 102 may transfer the collected electricity to the high-energy cell pack 112 or the high-power cell pack 116, thereby adding charge to one or both of the batteries when braking. Regenerative braking increases the overall efficiency of the vehicle and extends its driving range by utilizing captured kinetic energy.

The induction motor 102 may be coupled to an induction controller, shown as controller 104. The induction motor controller 104 can modulate the power, such as the current, provided to the induction motor 102 from a battery (e.g., the high-power cell pack 116, the high-energy cell pack 112) to affect/control the torque and/or speed of the motor. The induction motor controller 104 may dynamically adjust the rotation of the induction motor 102 according to commands from the master controller 118. These commands correspond to operational parameters, such as accelerator pedal position, the brake pedal position, the vehicle speed, navigational inputs, and/or run time, according to some embodiments.

The permanent magnet motor 106 (PM motor) may serve/operate as a secondary assistive motor to the induction motor 102, according to exemplary embodiments. The PM motor 106 is a motor that uses magnets to create a fixed magnetic field within the motor. The PM motor 106 may include a stator and a rotor having permanent magnets. The permanent magnets are arranged in and around the rotor to create a fixed magnetic field within the rotor. When alternating current is applied to the PM motor 106, from a battery (e.g., the high-power cell pack 116, the high-energy cell pack 112) the stator therein generates a rotating magnetic field. The rotating magnetic field generated by the stator interacts with the fixed magnetic field produced by the permanent magnets in the rotor to rotate the rotor. The energy produced by the rotor as it rotates is transferred through an output shaft and the vehicle system 100 components, which ultimately transmits the force to the wheels, enabling the vehicle to move.

The PM motor 106 may be operable to provide higher torque outputs than the induction motor 102. The PM motor 106 may also be more energy efficient than the induction motor 102 at lower loads (e.g., less than 40% of a predefined peak torque value). For example, the PM motor 106 may be used when starting a vehicle and when accelerating the vehicle. Additionally, the PM motor 106 may provide relatively faster and more efficient acceleration from standstill compared to the induction motor 102. In this way, the PM motor 106 may be utilized relatively more often when driving on roads with stoplights, stop signs, round abouts, yields, etc. (e.g., conditions that may result in stop-and-go situations). The PM motor 106 may also be utilized as an accelerating motor when the vehicle is undergoing various accelerating maneuvers, such as merging onto a highway. After acceleration (e.g., after entrance onto the highway) and at a relatively consistent speed (e.g., in cruising mode), the vehicle's torque may be provided by the induction motor 102 based on a command from the master controller 118.

It should be understood that the architecture shown can include any suitable additional or alternative electric motors or gas/diesel engines. For example, the system may be configured as a hybrid system that includes an internal combustion in addition to the PM motor 106 and the induction motor 102. In some embodiments, an internal combustion engine may be used in place of the induction motor 102 or the PM motor 106. The engine may be any type of engine that generates exhaust gas, such as a gasoline, natural gas, or diesel engine, and/or any other suitable engine. The engine includes one or more cylinders and associated pistons whereby the one or more cylinders may be arranged in a variety of ways (e.g., v-arrangement, inline, etc.). Air from the atmosphere is combined with fuel, and combusted, to produce power for the vehicle. Combustion of the fuel and air in the compression chambers of the engine produces exhaust gas that is operatively vented to an exhaust pipe and to, in some embodiments, an exhaust aftertreatment system. While not shown, the vehicle may also include additional systems, such as the exhaust aftertreatment system, a lubrication system, a hydraulic system, and/or other systems.

The permanent magnet motor 106 may be coupled to a permanent magnet motor (i.e., a PM) controller 108. The permanent magnet motor controller 108 can modulate the power, such as voltage and/or current, provided to the permanent magnet motor 106, and thus affect rotation of the motor 106. The permanent magnet motor controller 108 may dynamically adjust the rotation of the permanent magnet motor 106 according to commands from the master controller 118. These commands correspond to operational parameters, such as accelerator pedal position, the brake pedal position, the vehicle speed, navigational inputs, and run time, according to some embodiments.

It should be understood that the controllers 104 and 108 may be any suitable motor controller. Thus, the controllers 104 and 108 may include one or more processing circuits having one or more processors and one or more memory devices. The processors and memory may have the structure as described herein with respect to the processor 122 and memory device 124. In some examples, the functionality of the controller 104 and/or 108 may be included within the master controller 118.

The vehicle system 100 is shown to include multiple battery or electrical energy storage devices/components. In particular, the vehicle system 100 is shown to include a high-energy cell pack 112 and a high-power cell pack 116. The high-energy cell pack 112 and the high-power cell pack 116 may each be coupled to a battery management system. Each battery management system (BMS), shown as first BMS 110 and the second BMS 114, is communicatively coupled to the master controller 118, according to some embodiments. In exemplary embodiments, the first BMS 110 and the second BMS 114 each contain or include dedicated BMS controllers. The BMS controllers may include at least one processing circuit having at least one processor and at least one memory, whereby the at least one processor and memory are communicatively coupled. The memory is one or more devices (e.g., RAM, ROM, Flash memory, hard disk storage) for storing data and/or computer code for completing and/or facilitating the various processes described herein. The memory is or includes non-transient volatile memory, non-volatile memory, and non-transitory computer storage media. The memory includes database components, object code components, script components, or any other type of information structure for supporting the various activities and information structures described herein with respect to operation of the first BMS 110 and the second BMS 114, respectively. The memory is communicatively coupled to the processor and includes computer code or instructions for executing one or more processes described herein. The processor is implemented as one or more Application Specific Integrated Circuits (ASICs), Field Programmable Gate Arrays (FPGAs), a group of processing components, or other suitable electronic processing components.

In some embodiments, the BMS controllers are communicatively coupled with sensors 125 in or around the high-energy cell pack 112 and/or the high-power cell pack 116. In some embodiments, the first BMS 110 and the second BMS 114 acquires battery data (e.g., SOC, battery use patterns, battery age, battery type, battery temperature, etc.) from the sensors 125 in or around the batteries on board the vehicle. The battery controllers may transmit battery data to the master controller 118.

Responsive to commands from the master controller 118, a first BMS 110 may activate or deactivate the high-energy cell pack 112, whereas a second BMS 114 may activate or deactivate the high-power cell pack 116. Activation may also include controlling the energy provided to each high-energy cell pack 112, 116 and provided from each high-energy cell pack 112, 116. In some embodiments, at least one of the battery management systems 110 and 114 are integrated with the master controller 118. Thus, the structure and function of the battery management systems 110 and 114 may be integrated with the master controller 118 to decrease the number of hardware components. In other embodiments and as shown, the separate BMS components are utilized relative to the master controller 118.

The high-energy cell pack 112 is at least one battery (energy storage device) that is structured or configured to store energy per unit of volume or weight above a predefined threshold (e.g., >400 kWh/kg). The battery chemistry of the high-energy cell pack 112 gives the high-energy cell pack 112 higher energy density (kWh/kg) than the high-power cell pack 116. The particular chemical formulation of the high-energy cell pack 112 renders the battery more suitable for steady state and low to moderate electrical current scenarios (e.g., cruise mode, low load mode) compared to the high-power cell pack 116. The high-energy cell pack 112 may be a lithium-ion battery, such as a lithium iron phosphate battery, according to an exemplary embodiment. In other embodiments, the high-energy cell pack 112 may be a solid-state battery, a Nickel-metal hydride battery, a Lithium-Sulfur battery or any other applicable battery type.

In the example shown, the high-power cell pack 116 is at least one battery (energy storage device) that is structured or configured to handle higher currents more efficiently than the high-energy cell pack 112. As referred to herein, "high power" means a power output above a predefined high level threshold (e.g., > 130 kWh). According to exemplary embodiments, the high-power cell pack 116 is a lithium-ion battery having a NMC chemistry. NMC batteries are designed to handle higher currents (e.g., 300-500 Amps, 50-350 kW) without significantly degrading the performance and capacity of the battery. The high-power cell pack 116 may comprise varying chemistries depending on the size and needs of the application (e.g., vehicle that embodies the vehicle system 100). The high-power cell pack 116 may be designed for faster charging with less degradation than the high-energy cell pack 112. For example, the high-power cell pack 116 may be charged at 50-300 kW, whereas the high-energy cell pack 112 may be charged at 3.3-22 kW. When working with/powering the PM motor 106, the high-power cell pack 116 delivers relatively high currents that may be used to enable the vehicle to accelerate relatively quickly and efficiently. When working with/powering the induction motor 102, the high-power cell pack 116 may deliver relatively high currents while the vehicle that embodies the vehicle system 100 utilizes induction braking.

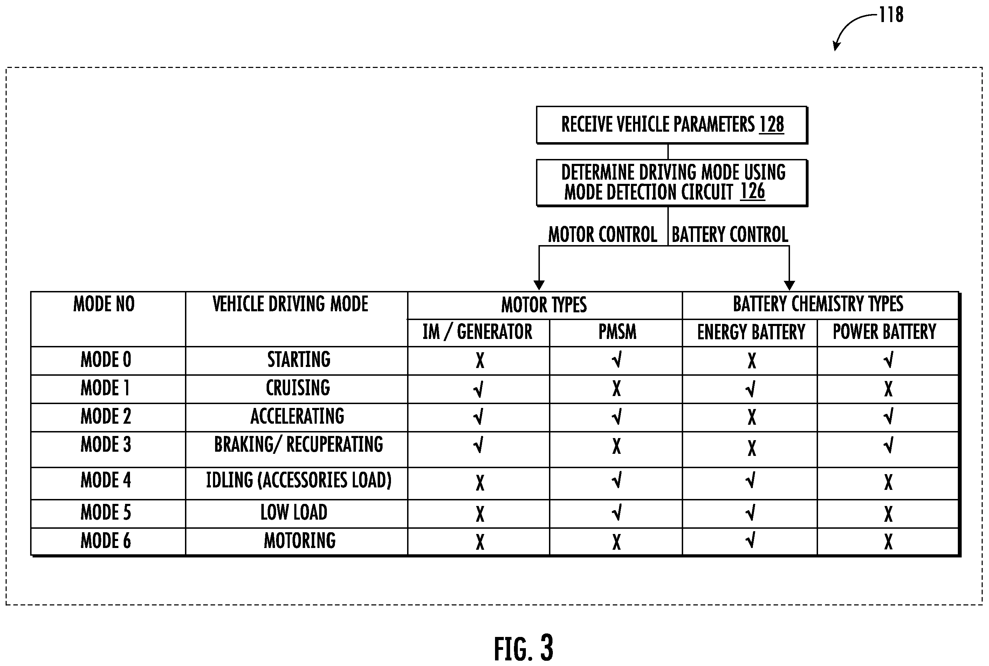

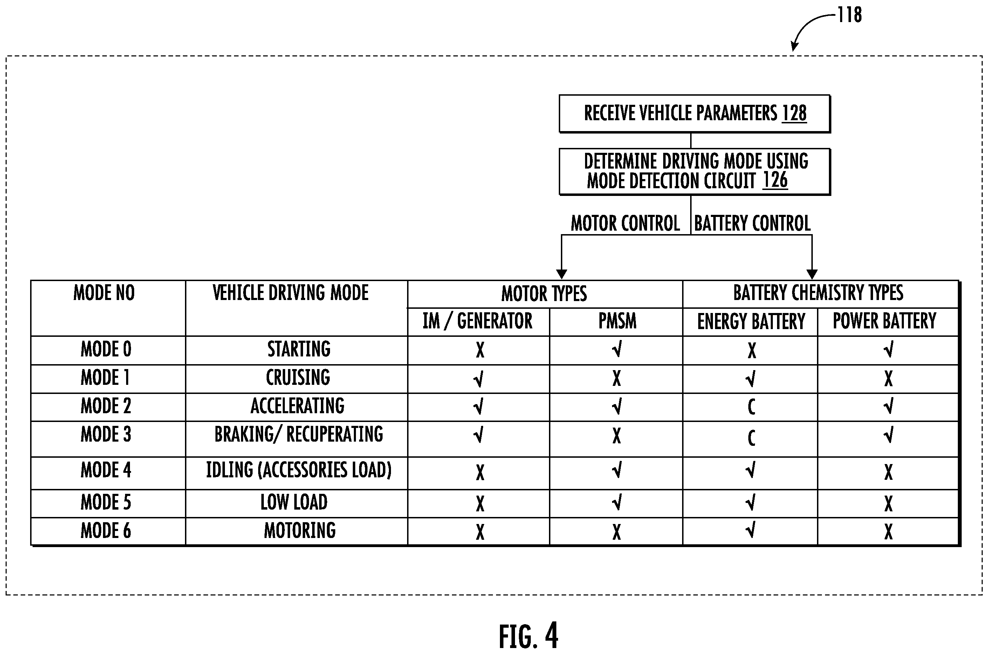

The induction motor 102, PM motor 106, high-energy cell pack 112, and high-power cell pack 116 are each coupled to a master controller 118, according to an exemplary embodiment. The master controller 118 may determine or receive an indication regarding what operating mode the vehicle is in and operate the motors and/or energy storage devices responsive to the determined operating mode. The master controller 118 can transmit one or more control signals to the controller 104 of the induction motor 102 and/or the controller 108 of the PM motor 106 to activate one, or both, depending on the operating mode. Simultaneously or additionally, the master controller 118 can transmit one or more signals to the first BMS 110 of the high-energy cell pack 112 and the second BMS 114 of high-power cell pack 116 the activate one or both, depending on the operating mode. In some examples, the master controller 118 may activate only the high-energy cell pack 112 or the high-power cell pack 116 without activating the induction motor 102 or the PM motor 106. The various operating modes and activation combinations are explained in more detail under FIGS. 3 and 4 below.

A user may operate the I/O device 132 to engage the high-power cell pack 116 (e.g., instead of the high-energy cell pack 112). For example, the user may operate the I/O device 132 to engage the high-power cell pack 116 in the event that a charging station is within a predefined distance of the system 100. In some examples, the master controller 118 may engage the high-power cell pack 116 automatically (e.g., without user input) in the event that a charging station is within a predefined proximity/distance of the system 100. In this way, the electrical power stored within the high-power cell pack 116 is depleted by the components of the system 100 (e.g., the induction motor 102, the PM motor 106, etc.) as the system 100 travels to reach the charging station. Engaging the high-power cell pack 116 based on user input and/or proximity to the charging station may enable a fast charging capability of the high-power cell pack 116. For example, upon reaching the charging station, the high-power cell pack 116 may be charged at a "fast charger." Accordingly, the high-power cell pack 116 may be charged relatively faster than the high-energy cell pack 112, because the high-power cell pack 116 may be capable of receiving a higher charge current rate than the high-energy cell pack 112 (e.g., due to less internal resistance than the high-energy cell pack 112, due to a different chemistry than the high-energy cell pack 112, etc.).

Referring now to FIG. 2, the powertrain schematic of FIG. 1 is shown with an added range extender 200, according to exemplary embodiments. The range extender 200 may be an auxiliary power source to supplement at least one energy storage device, shown as the high-energy cell pack 112, thereby increasing the vehicle's driving range. The range extender 200 may be an internal combustion engine (ICE) mechanically coupled to a generator. The ICE may be coupled with the high-energy cell pack and/or directly to the vehicle's drivetrain (e.g., directly to the induction motor 102, PM motor 106, drive shafts, the transmission). As a crankshaft internal to the ICE rotates, the rotational energy is transferred to the ICE's generator or to the vehicle's drivetrain. The generator may convert the rotational energy into electricity and may transfer the electricity to the high-energy cell pack 112, thereby charging the high-energy cell pack 112.

In other embodiments, the range extender 200 may be a hydrogen fuel cell range extender. Hydrogen fuel cell range extenders use hydrogen gas to generate electricity through a chemical reaction with Oxygen in a fuel cell stack. The energy generated in the chemical reaction is converted to electricity within a hydrogen fuel cell range extender. The hydrogen fuel cell range extender may transfer the generated energy to the high-energy cell pack 112 to charge the high-energy cell pack 112. Alternatively or additionally, the hydrogen fuel cell range extender 200 may transfer the generated energy directly to the vehicle's drive (e.g., directly to the induction motor 102, PM motor 106, drive shafts, the transmission).

In some embodiments, the range extender 200 may activate when the high-energy cell pack 112 drops below a preset State of Charge (SOC) threshold for the high-energy cell pack 112 (e.g., <20%, etc.). The preset SOC may be defined by an operator via the master controller 118. In alternate embodiments, the range extender 200 may serve as a charger for the high-energy cell pack 112. In this way, the range extender 200 increases the driving range of the vehicle by slowing the loss of charge, or by increasing the SOC responsive to the SOC dropping below the preset SOC threshold. The range extender 200 along with the high-energy cell pack 112 may be controlled by the first BMS 110. Responsive to control signals from the master controller 118, the first BMS 110 may activate or deactivate the range extender 200.

### Control Strategy

The master controller 118 includes a mode detection circuit 126 that is stored by the memory device 124 and selectively executing by the processor 122. During operation, the master controller 118 operates the vehicle system 100 based on the mode determined by the mode detection circuit 126. The mode detection circuit 126 determines a vehicle mode based on received and/or determined vehicle operational parameters 128. In one embodiment, the operating or vehicle operating modes may include a starting mode, a cruising mode, an accelerating mode, a braking mode, an idling mode, a low load mode, and a motoring mode. The vehicle operating modes correspond to received and/or determined vehicle operational parameters, including an accelerator pedal position value, a brake pedal position value, a vehicle speed value, vehicle location information, and a vehicle run time value. The brake pedal position and accelerator positions may be measured or determined in terms of a percentage of pedal depression relative to a complete depression (i.e., a relative amount). Vehicle location information may include GPS data. In some embodiments, the vehicle location information may include navigation information that is based on GPS information to provide a current location of the vehicle and mission data (e.g., the route to be travelled by the vehicle) that is transmitted to the master controller 118. Each of the vehicle parameters 128 may include a predefined threshold or predefined range that correspond to the various vehicle operating modes. For example, if the accelerator pedal is depressed by 30% or more (i.e., a predefined threshold), then the mode detection circuit 126 may determine that the vehicle mode is the "accelerating mode."

The "starting mode" corresponds to the state of the vehicle immediately after an operator operates the ignition to start the vehicle and the engine and/or motor begins running. Vehicle parameters 128 corresponding to the "starting mode" may include a near zero run time, a vehicle speed of 0 kmph, the brake pedal being depressed by 50% or more, the accelerator pedal not being depressed (depressed 0%), and/or an indication of "start" from an operator (e.g., a key switch being activated, a push button being depressed, etc.). In some embodiments, the starting mode may further include a navigational input regarding an origin point of a mission.

The "cruising mode" refers to the vehicle being in a steady state of motion. For example, a vehicle traveling on a relatively flat highway, on which load and speed are relatively consistent. Vehicle parameters 128 corresponding to the "cruising mode" may include 0% brake pedal depression, less than a predefined value of accelerator pedal depression (e.g., less than 30% depression), a navigational input indicating the vehicle is on a highway, and/or a consistent vehicle speed in a range between 90 and 120 km/h (55-75 mph). The vehicle parameter may also include an indication from an operator to operate the vehicle in a cruise control operating mode. In some examples, a user operating a vehicle in cruise control mode causes the master controller 118 to determine that the vehicle mode is the "cruising mode." As used herein, consistent speed is defined as within +/- 10 km/h of a particular speed for a preset duration of time (e.g., 30 seconds, 1 minute, 2 minutes, etc.). For example, a vehicle traveling at 85-95 km/h for two minutes would be considered to have a consistent speed.

The "accelerating mode" refers to a state in which the driver is depressing the accelerator pedal to accelerate from an initial speed to a relatively higher speed. Vehicle parameters 128 corresponding to the "accelerating mode" may include the accelerator pedal being depressed by more than a predefined amount (e.g., more than 30%) while the brake pedal is not depressed (0% depressed). In some embodiments, GPS data indicating that the vehicle is near or in a highway merge lane is a navigational input corresponding to the "accelerating mode." Being on a highway may correspond to the vehicle accelerating, and as such, serve as an indicator by the master controller 118 regarding when acceleration may be occurring.

The "braking mode" refers to a state in which a driver is depressing the brake pedal to decelerate from an initial speed to a lower speed. Vehicle parameters 128 corresponding to the "braking mode" may include the brake pedal being depressed by more than a predefined amount (e.g., 30%) while the accelerator pedal is not depressed (0% depressed). In some embodiments, GPS data indicating that the vehicle is driving in a city with stop-and-go conditions (e.g., stop signs, stop lights, roundabouts, yield signs, etc.) may serve as an additional vehicle parameter to confirm or verify the "braking mode."

The "idling mode" refers to the vehicle being on and running but not moving. In the "idling mode" the vehicle may be still, or moving slowly (e.g., 15 km/h or less). Vehicle parameters 128 corresponding to the "idling mode" may be similar to the vehicle parameters 128 corresponding to the "starting mode." The run time parameter may serve to differentiate the "idling mode" from the "starting mode." In some embodiments, a predefined low vehicle speed corresponds to the "idling mode," for example 0 km/h (0 mph).

The "low load mode" refers to a state where the vehicle's motors operate with less than a predefined peak torque amount (e.g., less than 40% of its predefined peak torque value). This mode occurs when the vehicle is not operating under significant demand, such as when it is neither accelerating rapidly nor carrying heavy loads. Vehicle operating parameters corresponding to the "low load mode" may include, but are not limited to, a vehicle speed that is steady but not high (e.g., 100 km/h or less), an accelerator pedal position less than a predefined value (e.g., less than 20% depression), a load value from a load sensor being less than a predefined value, and/or a combination thereof. In some embodiments, the master controller 118 may determine that the vehicle is in "low load" mode by individually testing the output torque values of the induction motor 102 and the PM motor 106, then comparing the output torque values to the predefined torque values for a corresponding speed for a given vehicle configuration. In an example, if the PM motor 106 drives the vehicle forward for a preset duration (e.g., one minute) at or below a preset speed threshold (e.g., 60 km/h), with a torque output that is 40% or less of the total tractive torque (i.e., the force produced by the powertrain and transferred through the transmission system to the wheels), then the master controller continues to activate the PM motor 106 and deactivates the induction motor 102.

The "motoring mode" refers to a state in which the vehicle is primarily powered by gravity, such as when driving downhill. In this mode, the vehicle's wheels and powertrain are driven by gravitational forces, allowing the vehicle to move with no or minimal usage of the motor(s) (e.g., the induction motor 102, the PM motor 106). Parameters for the "motoring mode" may include less than a predefined value (e.g., 5%) of accelerator pedal depression, less than a predefined value (e.g., 20%) of brake pedal depression, and/or navigational inputs (e.g., altitude, GPS coordinates, etc.) indicating a downhill slope.

Referring now to FIG. 3, a graph of a control strategy based on at least one of a battery type, a motor type, or a vehicle driving mode for a vehicle is shown, according to an exemplary embodiment. The master controller 118 can implement the control strategy of FIGS. 1 and 2. In exemplary embodiments, the operating mode of the vehicle is identified based on vehicle operational parameters using a predefined control logic/process. The operational parameters may include an accelerator pedal position, a brake pedal position, a vehicle speed, at least one navigational input, a run time, and so on. As mentioned above, predefined vehicle operating modes may include starting, cruising, accelerating, braking, idling, low load crawling, and motoring. The various vehicle operating modes may be determined, received, and/or implemented by the master controller 118 using a mode detection circuit/process. The mode detection circuit 126 may correlate the vehicle operational parameters to the various predefined vehicle operating modes. As a result, the master controller 118 may selectively control each motor and/or battery to most efficiently accomplish the selected vehicle operating mode. In the example shown, the check marks indicate which components are active, whereas the "X" marks indicate which components are inactive.

As shown in FIG. 3, the master controller 118 determines the motor control and the battery control for the motors and batteries/energy storage devices of the vehicle system 100 according to the determined vehicle operating mode. The "motor control" refers to which of the motors (e.g., the induction motor 102 or the PM motor 106 in the example of FIGS. 1-2) activate or deactivate based on the determined vehicle mode. The "battery control" refers to which battery to operate to supply power to the activated motor(s). In the "starting" mode, the PM motor 106 and the high-power cell pack 116 are utilized to provide power to the vehicle to, for example, propel or move the vehicle.

In the "cruising mode," the vehicle (and, particularly, the motors) may operate at a predefined torque value that may be relatively unchanging (e.g., within 5% of a predefined torque value). The predefined torque value may be determined based on the vehicle's size, weight, drivetrain configuration, and/or intended use. In an example, a provider may determine the predefined torque value for a given vehicle by operating the vehicle on a flat road at a consistent speed of 80 km/h for two minutes, the average torque output of the motors during the two minutes may be set as the predefined torque value. Other driving modes may have torque values that are higher or lower compared to the predetermined torque value for the corresponding speeds. The master controller 118 operates the powertrain to activate the induction motor 102 and the high-energy cell pack 112 to provide torque and energy to the vehicle during this operating mode. In the cruising mode, the PM motor 106 and high-power cell pack 116 are inactive or idle (i.e., not delivering power output).

In the "accelerating mode," the vehicle (and, particularly, one or more of the motors) utilizes high torque relative to the predefined torque value used in the "cruising mode" to accelerate the vehicle. The amount of torque generated is proportional to the amount of current supplied by the active battery. Thus, when the vehicle utilizes relatively higher torque to accelerate, the active battery supplies higher current to the active motor. To accommodate the high torque and high power draw, the master controller 118 may operate the vehicle system 100 to activate both the induction motor 102 and the PM motor 106, such that both motors provide torque or power to propel the vehicle. In this mode, the master controller 118 may operate the high-power cell pack 116 to deliver electrical power (e.g., current) to both motors.

In the "braking/recuperating" mode, the master controller 118 operates the vehicle system 100 to activate the induction motor 102 and the high-power cell pack 116. In this mode, the induction motor can collect the energy produced during braking. This process involves the induction motor 102 reversing its role from driving the wheels to generating electricity from the kinetic energy produced during braking. The energy produced during braking is then collected and stored in the high-power cell pack 116. This recuperated energy can be reused to power the vehicle, thereby extending the range of the vehicle.

In the "idling mode," the vehicle is still/parked or traveling at a low speed (e.g., less than 15 km/h), which utilizes little power from the active motor. Thus, the master controller 118 operates the vehicle system 100 to activate the PM motor 106, since the PM motor 106 is more efficient at low speeds than the induction motor 102, and the high-energy cell pack 112, which is designed to be more suitable for steady state operations than the high-power cell pack 116.

In the "low load" mode, the PM motor 106 driving the vehicle forward at less than the predefined torque value (e.g., 40% of total tractive torque). The PM motor 106 is more efficient and effective than the induction motor 102 at lower loads, and the high-energy cell pack 112 has a higher energy density than the high-power cell pack 116, and is therefore better suited for steady state operations, like the operations in the "low load" mode. Thus, the master controller 118 activates the PM motor 106 and the high-energy cell pack 112 while the vehicle operates in "low load" mode.

In "motoring" mode, the master controller 118 may command neither motor to be active. Instead, gravity powers the wheels and powertrain. In the "motoring" mode, neither motor needs to produce power (e.g., torque) in order to propel the vehicle forward. In some examples, the high-energy cell pack 112 is engaged in "motoring" mode to power accessories or auxiliary vehicle functions.

Referring now to FIG. 4, another control strategy based on at least one of a battery type, a motor type, or a vehicle driving mode for a vehicle is shown, according to exemplary embodiments. The master controller 118 may conditionally operate the battery cell packs based on the state of charge (SOC) of each of the batteries. In exemplary embodiments, the master controller 118 determines whether to activate the high-energy cell pack 112 or the high-power cell pack 116 based on the SOC of the high-energy cell pack 112 and the high-power cell pack 116 in the "accelerating" and the "braking/recuperating" modes. Responsive to the high-power cell pack 116 having an SOC below a predetermined threshold, the high-energy cell pack 112 provides power to the induction motor 102 or the PM motor 106 in the "accelerating" and the "braking/recuperating" mode.

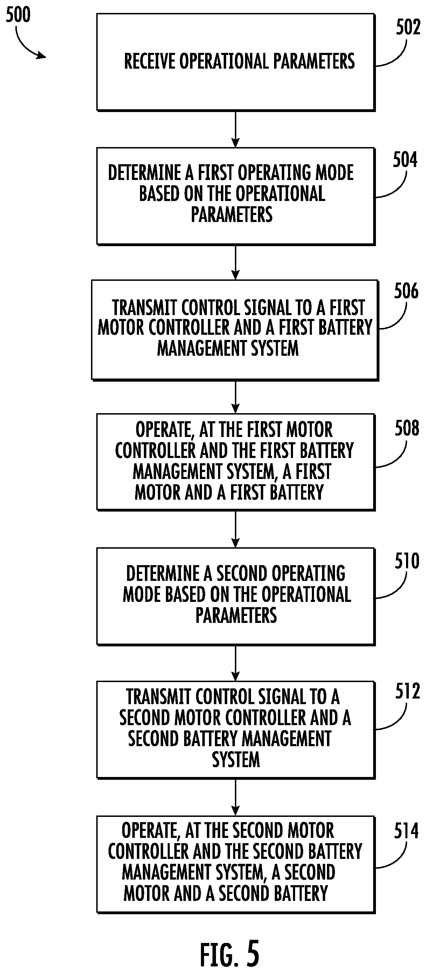

Referring now to FIG. 5, a flow chart for a control process for operating a multiple motor and multiple battery powertrain systems for a vehicle is shown, according to an exemplary embodiment. In some embodiments, the control process 500 is performed by the master controller 118.

In step 502, the master controller 118 may receive operational parameters regarding operation of the vehicle, such as the vehicle embodying the vehicle system 100 described herein. The operational or vehicle operational parameters may include, but are not limited to, an accelerator pedal position value, a brake pedal position value, a vehicle speed value, vehicle locational information including navigational inputs, and/or a run time of the vehicle or a component thereof (e.g., the PM motor 106 run time). The brake pedal position and accelerator positions may be measured and/or determined in terms of percentage of pedal depression. Navigational inputs may include GPS data and mission data (e.g., the route to be travelled) that is transmitted to the master controller 118. Run time may be measured from the time the vehicle is started. The run time may be in the aggregate (e.g., over multiple missions) or be specific to each mission/trip.

As discussed above, the master controller 118 may determine a first operating mode (e.g., a starting mode, a cruising mode, an accelerating mode, a braking/recuperating mode, an idling mode, a low load mode, and/or a motoring mode) based on the operational parameters received (step 504).

The master controller 118 may then transmit a control signal to a first motor controller and a first battery management system based on the determined operating mode (step 506). For example, if the master controller 118 determines the vehicle is in the "starting mode," then the master controller 118 may transmit a control signal to activate the PM motor 106 and the high-power cell pack 116. Responsive to receiving the control signal from the master controller 118, the first motor controller operates the first motor (e.g., the PM motor 106, the induction motor 102), and the first battery management system operates a first battery (e.g., the high energy cell pack, the high-power cell pack 116)(step 508).

During operation of the vehicle, the master controller 118 may continuously receive vehicle operational parameters. As a result, the master controller 118 may continuously determine a change to vehicle operating modes. When the operating mode of the vehicle changes or is determined to change, the master controller 118 determines a second operating mode based on updated operational parameters (step 510). For example, the master controller 118 may initially determine that the vehicle is in a "starting mode," but the operational parameters have changed, and vehicle is now determined to be in a "cruising mode."

Responsive to determining the second operating mode, the master controller 118 transmits a control signal to a second motor controller and a second battery management system (step 512). For example, the master controller 118 may transit at least one control signal to the induction motor 102 and the high energy cell pack. In some embodiments, the master controller 118 may transmit a signal to the first motor controller and the first battery management system indicating to activate the permanent magnet motor 106 and the high-power cell pack 116.

The second motor controller and the second battery management system may operate the second motor and the second battery (e.g., the induction motor 102 and the high-energy cell pack 112 in "cruising mode") (step 514). In this way, the vehicle transmission is dynamically operated based on the operational parameters of the vehicle, wherein the active battery and active motor change based on the determined operating mode.

Conventional electric/battery powered vehicles often use one high-cost motor that contains rare earth materials (e.g., one large permanent magnet motor) in a vehicle's powertrain architecture. One large permanent magnet motor is costly, runs a risk of demagnetization, and is often ineffective at performing regenerative braking. The present disclosure utilizes a smaller (and thus less expensive) permanent magnet motor along with an induction motor and leverages the unique strengths to each of the motors with a control strategy. The induction motor has low torque and low efficiency at lower speeds whereas the permanent magnet motor provides high torque and efficiency at lower loads. Additionally, induction motors can engage more effectively in regenerative braking than permanent magnet motors.

Conventional electric/battery powered vehicles often use one battery, for example, one lithium-ion battery. In addition to leveraging the advantages of two types of electric motors, the present disclosure utilizes a high-energy battery and a high-power battery. The high-energy battery (ex. lithium iron phosphate chemistry, lithium-ion chemistry) has high energy density (kWh/kg) and suitable for steady state operations. The high-energy battery exhibits lower cycle life at higher depth of discharge and at higher currents/C-rates (i.e., the measured rate at which the battery is discharged relative to its maximum capacity (e.g., 1C rate means that a fully charged battery can fully discharge in one hour). The high-power battery delivers high current for transient operations at lower energy densities (kWh/ kg) than the high-energy battery. The high-power battery is suited to rapid recharge and sudden acceleration.

A master controller activates and deactivates the various motors and batteries based on a control strategy. The control strategy is developed based on the distinct motor and battery characteristics across driving modes to achieve desired steady state and transient performance. The control strategy also achieves relatively higher range and battery life compared to conventional electric/battery powered vehicles. This control strategy and powertrain are suitable for heavy-duty vehicles or industrial vehicles that require features like regenerative braking.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used hereinto describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A communicably "coupled" to circuit B may signify that the circuit A communicates directly with circuit B (i.e., no intermediary) or communicates indirectly with circuit B (e.g., through one or more intermediaries).

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multicore processor (e.g., a dual core processor, triple core processor, quad core processor, etc.), microprocessor, etc. In some embodiments, the one or more processors may be external to the apparatus, for example the one or more processors may be a remote processor (e.g., a cloud-based processor). Alternatively or additionally, the one or more processors may be internal and/or local to the apparatus. In this regard, a given circuit or components thereof may be disposed locally (e.g., as part of a local server, a local computing system, etc.) or remotely (e.g., as part of a remote server such as a cloud-based server). To that end, a "circuit" as described herein may include components that are distributed across one or more locations.

Embodiments within the scope of the present disclosure include program products comprising computer or machine-readable media for carrying or having computer or machine-executable instructions or data structures stored thereon. Such machine-readable media can be any available media that can be accessed by a computer. The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing. More specific examples of the computer readable medium may include, but are not limited to, a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device. Machine-executable instructions include, for example, instructions and data which cause a computer or processing machine to perform a certain function or group of functions.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including, but not limited to, wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present disclosure may be written in any combination of one or more other programming languages, including an object-oriented programming language such as Java, Smalltalk, C++ or the like and conventional procedural programming languages, such as the "C" programming language or similar programming languages. The computer readable program code may execute entirely on the user's computer, partly on the user's computer, as a stand-alone computer-readable package, partly on the user's computer and partly on a remote computer or entirely on the remote computer or server. In the latter scenario, the remote computer may be connected to the user's computer through any type of network, including a Local Area Network (LAN) or a Wide Area Network (WAN), or the connection may be made to an external computer (for example, through the Internet using an Internet Service Provider).

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the apparatus and system as shown in the various exemplary embodiments is illustrative only. Additionally, any element disclosed in one embodiment may be incorporated or utilized with any other embodiment disclosed herein.

## Claims

1. A system of a vehicle, the system comprising:
a first motor associated with a first controller;
a second motor associated with a second controller;
a first battery associated with a first battery management system;
a second battery associated with a second battery management system; and
a master controller coupled to the first controller, the second controller, the first battery management system, and the second battery management system, wherein the master controller is configured to:
receive an operating mode associated with the vehicle; and
activate the first motor or the second motor and the first battery or the second battery based on the operating mode associated with the vehicle.

2. The system of Claim 1, wherein:
(a) the first motor is a different motor type from the second motor or,
(b) the first motor is an induction motor and the second motor is a permanent magnet motor, or
(c) the first battery is a Lithium-Ion battery and the second battery is a high power lithium-ion battery having a nickel manganese cobalt chemistry, or
(d) the master controller is configured to activate both the first motor and the second motor based on the operating mode.

3. The system of claim 1, further comprising a range extender coupled to the first battery and the first controller.

4. The system of claim 1, wherein the operating mode associated with the vehicle is a motoring mode, and wherein the master controller is configured to deactivate the first motor and the second motor and to activate the first battery based on the operating mode being the motoring mode.

5. The system of claim 1, wherein the operating mode associated with the vehicle is an idling mode or a low load mode, and wherein the master controller is configured to activate the second motor and the first battery based on the operating mode being the idling mode or the low load mode.

6. The system of claim 1, wherein the operating mode associated with the vehicle is a braking mode and wherein the master controller is configured to activate the first motor and the second battery based on the operating mode being the braking mode.

7. A vehicle system, comprising:
a first motor;
a second motor;
a first battery coupled with at least one of the first motor or the second motor;
a second battery coupled with at least one of the first motor or the second motor; and
a controller comprising at least one processor coupled with at least one memory device storing instructions that, when executed by the at least one processor, cause the controller to perform operations comprising:
receiving data indicative of an operating mode of a vehicle including the vehicle system;
activating at least one of the first motor or the second motor based on the operating mode of the vehicle; and
activating at least one of the first battery or the second battery based on the operating mode of the vehicle.

8. The vehicle system of claim 7, wherein the first motor is an induction motor configured to generate electrical power from mechanical energy generated by the vehicle during braking and to transmit the electrical power to the first battery.

9. The vehicle system of claim 8, further comprising a range extender coupled with the first battery, wherein the instructions, when executed by the at least one processor, further cause the controller to perform operations comprising:
receiving data indicative of a state of charge (SOC) of the first battery; and
operating the range extender to transmit the electrical power to the first battery based on the SOC of the first battery being less than a predefined SOC threshold.

10. The vehicle system of claim 1 or claim 7, wherein the operating mode of the vehicle is an accelerating mode, and wherein the controller:
activates both the first motor and the second motor based on the operating mode being the accelerating mode; and
activates the second battery based on the operating mode associated with the vehicle being the accelerating mode.

11. The vehicle system of claim 7, wherein the operating mode associated with the vehicle is a motoring mode and wherein the at least one processor coupled with the at least one memory device storing further instructions that, when executed by the at least one processor, cause the controller to perform operations comprising:
deactivating the first motor or the second motor based on the operating mode being the motoring mode, such that neither the first motor nor the second motor is active in the motoring mode; and
activating the first battery based on the operating mode being the motoring mode.

12. The vehicle system of claim 1 or claim 7, wherein the operating mode associated with the vehicle is a starting mode and wherein the controller
activates the second motor based on the operating mode being the starting mode; and
activates the second battery based on the operating mode being the starting mode.

13. A method, comprising:
receiving, by a controller, at least one operational parameter of a vehicle;
determining, by the controller, that the vehicle is in a first operating mode based on the received at least one operational parameter;
responsive to determining that the vehicle is in the first operating mode, activating a first motor of the vehicle and a first battery of the vehicle of the vehicle;
determining, by the controller, that the vehicle is operating in a second operating mode; and
responsive to determining that the vehicle is operating in the second operating mode, activating a second motor of the vehicle and a second battery of the vehicle.

14. The method of Claim 13, further comprising:
determining, by the controller, that the vehicle is in a third operating mode; and
responsive to determining that the vehicle is in the third operating mode, activating one of the first motor or the second motor of the vehicle and one of the first battery or the second battery of the vehicle.

15. The method of Claim 14, wherein the first operating mode and the second operating mode comprise any one of:
a starting mode;
a cruising mode;
an accelerating mode;
a braking/recuperating mode;
an idling mode;
a low load mode; or
a motoring mode.
